# FASCICULE DE BREVET EUROPEEN

(11) **EP 2 366 275 B1**
(45) Date de publication et mention de la délivrance du brevet: **27.11.2013**
(21) Numéro de dépôt: 11156458.9
(22) Date de dépôt: 01.03.2011
(51) Int. Cl.: A01D 34/535

(54) **Dispositif de fixation de couteaux sur le rotor d'une faucheuse-débroussailleuse**
Vorrichtung zur Messerbefestigung auf den Rotor eines Böschungsmähers
Device for fastening knives on the rotor of a hedge and grass cutter

(30) Priorité: 16.03.2010 FR 1051854
(43) Date de publication de la demande: 21.09.2011
(73) Titulaire: Kuhn-Audureau S.A., 85260 La Copechagnière (FR)
(72) Inventeur: Gautron, Pascal, 85250 Saint-Fulgent (FR); Peterschmitt, Mickaël, 85300 Le Perrier (FR)
(74) Mandataire: Esch, Esther Evelyne

(56) Documents cités:
- EP-A1- 1 297 737
- GB-A- 1 155 977
- US-A- 3 465 507
- US-A- 4 241 568
- US-A- 6 000 205

## Description

L'invention concerne un dispositif de fixation des couteaux sur le rotor d'une faucheuse-débroussailleuse, un rotor ainsi équipé et une faucheuse-débroussailleuse avec un tel rotor.

Dans le domaine des faucheuses-débroussailleuses employées pour l'entretien du paysage les tracteurs sont généralement équipés d'un bras articulé positionné à l'arrière du véhicule sur lequel est fixé un outil de coupe. L'outil de coupe en question peut être un rotor, un sécateur ou encore une tailleuse de haies.

Lorsque l'outil de coupe est un rotor, il comporte des couteaux qui sont placés sur la périphérie d'un arbre ou corps pouvant être entraîné en rotation de manière à réaliser le travail. Traditionnellement différentes conformations de couteaux sont utilisables, ils présentent le point commun d'être portés par un étrier, ou manille, fixé sur le rotor par l'intermédiaire d'un ensemble formant palier. L'ensemble formant palier est généralement constitué de deux flasques, tel que cela est par exemple décrit dans le document FR 2 211 841.

L'articulation des lames portées par la manille doit être aussi mobile que possible, cette articulation porteuse de couteaux du même genre que celle utilisée dans le dispositif de l'invention est décrite plus précisément dans le document FR 2 651 087.

Un ensemble de coupe décrit dans EP 1 297 737 montre des couteaux légèrement différents de ceux cités dans FR 2 651 087 et une articulation sensiblement identique.

Dans les trois documents FR 2 211 841, FR 2 651 087 et EP 1 297 737 l'axe de rotation de la manille qui porte les couteaux est formé par un boulon verrouillé par un écrou à l'extérieur de l'un des flasques.

Ce mode de fixation des couteaux présente plusieurs inconvénients :
- le montage et le démontage des couteaux est assez long en raison du temps nécessaire pour visser ou dévisser les écrous,
- l'opération est délicate voire très problématique après un temps de fonctionnement de la machine lorsque les écrous sont usés ou lorsque les boulons sont déformés.

Le brevet US 3,465,507 montre un mode de fixation de couteaux sur un axe sans l'utilisation de manilles. Cet axe qui porte directement des couteaux est engagé dans des oreilles solidaires d'un rotor et est retenu axialement au moyen d'un ressort comportant une partie coudée logée dans une gorge prévue sur ledit axe. Dans ce montage, le ressort peut être détendu ou même être dégagé de la gorge par exemple par suite d'un accrochage avec un obstacle. Dans un tel cas, l'axe peut se déplacer axialement dans les oreilles du rotor et libérer les couteaux qui peuvent être projetés à une grande vitesse vers l'extérieur et causer ainsi d'importants dégâts.

L'invention a pour objectif de résoudre les principales difficultés des dispositifs connus en proposant un nouveau mode de fixation des couteaux sur le rotor d'une faucheuse-débroussailleuse.

La présente invention propose un dispositif de fixation de couteaux sur le rotor d'une faucheuse-débroussailleuse comprenant une manille présentant deux branches ayant chacune un oeilleton, chaque manille portant un ou plusieurs couteaux, le dispositif étant caractérisé par le fait qu'un axe cylindrique reliant les deux oeilletons des branches de la manille est immobilisé longitudinalement dans un ensemble formant palier, qu'il traverse, au moyen d'une pièce élastique qui est elle-même engagée totalement dans un logement prévu dans ledit palier de fixation.

Les avantages du dispositif de fixation de couteaux sur le rotor d'une faucheuse-débroussailleuse selon l'invention sont multiples :
- le montage des couteaux est effectué en un temps très bref, ce qui est très avantageux d'un point de vue économique pour la réalisation industrielle de l'outil de coupe,
- ce gain de temps est également très appréciable pour le remplacement par l'exploitant de couteaux abîmés au cours de la vie de la machine,
- l'absence d'écrou et la quasi impossibilité de déformation de l'axe de rotation formant liaison entre les branches de la manille font que l'opération de démontage des couteaux n'est pas affectée par l'usure du matériel,
- la disposition de la pièce élastique dans un logement empêche toute rencontre avec un obstacle. Le risque de libération accidentel d'un couteau est ainsi supprimé,
- un outil spécifique permettant de dégager le verrouillage élastique peut faciliter le montage ou le démontage des couteaux en vue d'une opération simple à réaliser.

D'autres caractéristiques et avantages de l'invention se dégageront de la description qui va suivre en regard des dessins annexés qui ne sont donnés qu'à titre d'exemples non limitatifs. Dans ces dessins :
- La figure 1 est une vue générale d'une faucheuse-débroussailleuse comportant un outil de coupe.
- La figure 2 illustre l'outil de coupe lui-même, plus particulièrement le rotor muni de couteaux.
- La figure 3 présente en vue éclatée les différents éléments essentiels du dispositif de fixation des couteaux selon une première variante de l'invention.
- Les figures 4, 5 et 6 illustrent une opération de démontage de couteaux au moyen d'un outil spécifique selon la première variante de l'invention.
- La figure 7 montre un autre moyen de fixation des couteaux selon une deuxième variante de l'invention.
- La figure 8 présente en vue éclatée les différents éléments essentiels du dispositif de fixation des couteaux selon la deuxième variante de l'invention.
- La figure 9 représente un autre mode de fixation selon une troisième variante.
- Les figures 10 et 11 représentent en vues éclatées les différents éléments essentiels du dispositif de fixation des couteaux selon la troisième variante.
- Les figures 12 et 13 représentent des coupes partielles du dispositif de fixation selon la troisième variante.

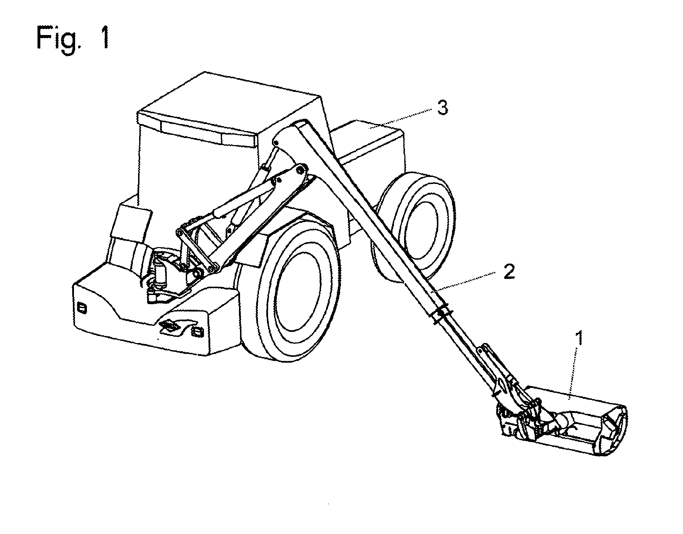

Le dispositif de fixation des couteaux objet de l'invention est placé sur le rotor d'une faucheuse-débroussailleuse telle que représentée sur la figure 1. Une telle machine comporte généralement un outil de coupe (1) placé à l'extrémité d'un bras articulé (2), lequel bras étant positionné à l'arrière d'un tracteur (3) qui permet de déplacer et d'animer ledit outil (1).

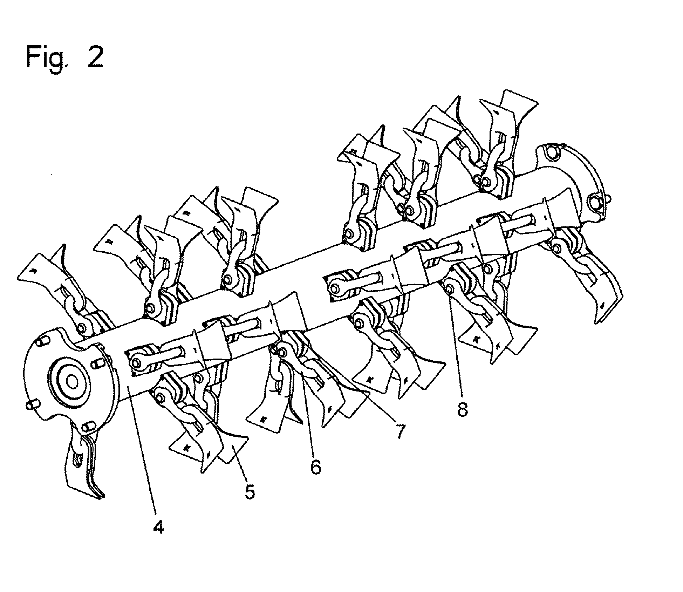

L'outil de coupe (1) est plus précisément représenté sur la figure 2. Cette figure montre un rotor (4) porteur de couteaux (5), lesquels couteaux (5) comportent une ouverture permettant le passage d'une manille (6), laquelle manille est articulée avec le rotor (4) et fixée avec celui-ci par un dispositif objet de l'invention.

Tel que cela est représenté sur la figure 2 le rotor peut comporter un nombre élevé de couteaux agencés sur sa périphérie.

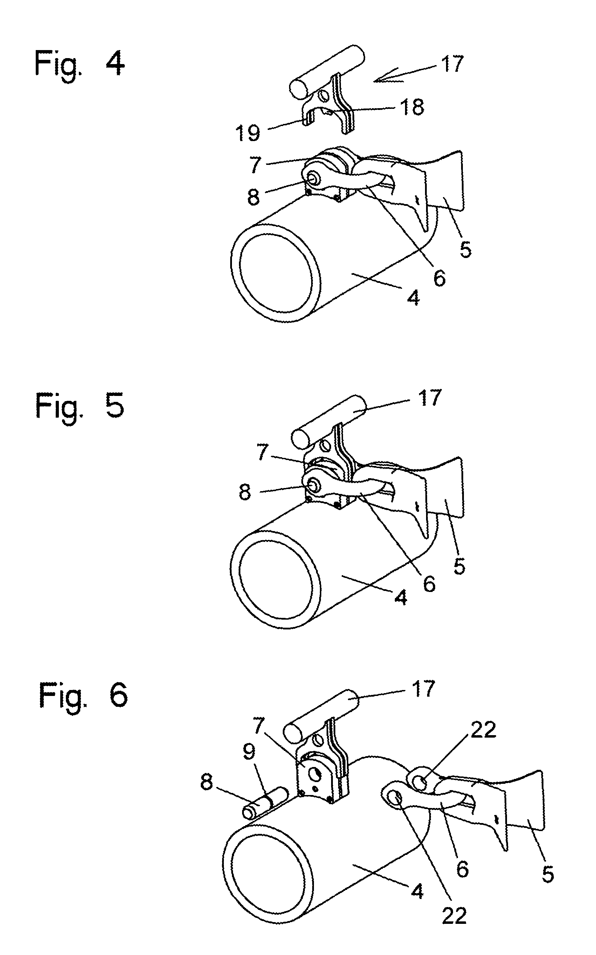

Chaque manille (6) est maintenue fixée sur le rotor (4) par l'intermédiaire d'un ensemble formant palier (7) traversé par un axe cylindrique (8) formant axe de rotation, lequel axe cylindrique relie les deux branches de la manille au travers d'oeilletons (22) représentés sur la figure 6.

En fonctionnement, le rotor (4) est animé en rotation et les manilles (6) et les couteaux (5) se placent radialement par rapport au rotor (4) sous l'effet de la force centrifuge. Les couteaux (5) en mouvement déchiquettent alors les branchages et les buissons et coupent les plantes, la présence d'un obstacle sur une partie de la zone de coupe n'entraîne pas le blocage du rotor du fait que les couteaux (5) comportent une mobilité très importante et que les manilles (6) sont elles-mêmes articulées.

Lorsque le rotor (4) s'arrête de tourner, les couteaux (5) retombent sous l'effet de la gravité.

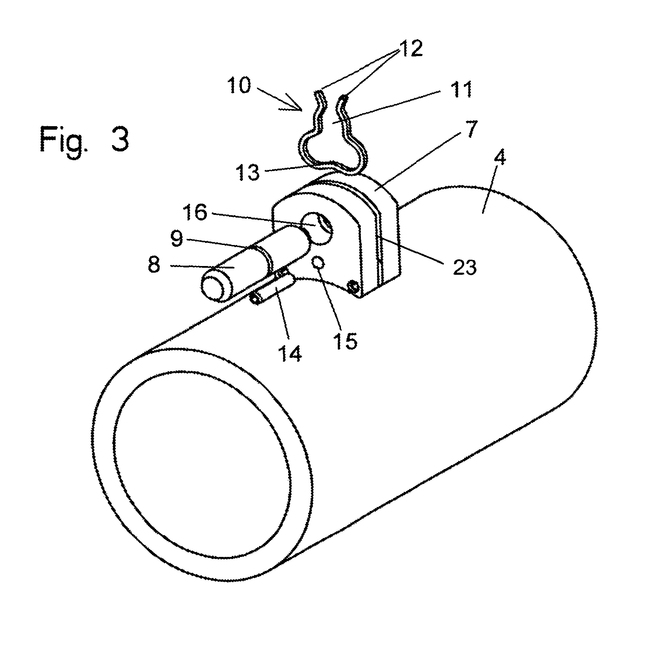

Selon l'invention et en références aux figures 3, 6, 7 et 8 un axe cylindrique (8) reliant les deux oeilletons (22) des branches de la manille (6) est immobilisé longitudinalement dans un ensemble formant palier (7) qu'il traverse, au moyen d'une pièce élastique (10, 20). L'ensemble formant palier (7) est solidairement fixé sur le corps du rotor (4) et comporte un orifice (16) pour le passage de l'axe (8).

Selon l'invention, l'élément élastique (10, 20) est positionné totalement dans un logement (23) situé dans la partie centrale de l'ensemble formant palier (7) et les branches de la manille (6) sont disposées à l'extérieur dudit ensemble.

Avantageusement au sens de l'invention l'axe cylindrique (8) comporte un relief en creux (9) apte à coopérer avec l'élément élastique (10, 20).

Avantageusement encore le relief en creux (9) est une gorge disposée sur le périmètre de l'axe cylindrique (8) et au milieu de la hauteur du cylindre, toutefois il peut être envisagé que le relief en creux soit une entaille, une portion concave, une forme estampée, ou toute autre motif, sans sortir du cadre de l'invention.

La figure 3 illustre en vue éclatée les différentes pièces constitutives de ce dispositif de fixation selon une première variante de l'invention, notamment l'ensemble formant palier (7) relié solidairement au rotor (4) et l'axe cylindrique (8) formant axe de rotation pour les branches de la manille (6), lesquelles branches ne sont pas représentées sur cette figure.

La pièce élastique selon cette première variante est un ressort (10) globalement conformé en U avec un resserrement (11) au milieu des branches (12) du U.

De préférence, la distance dans la partie de resserrement (11) des branches (12) du U du ressort (10), lorsque ce dernier est au repos, est inférieure au diamètre de l'axe cylindrique (8) et sensiblement égale ou légèrement inférieure au diamètre de la partie en creux (9) dudit axe cylindrique.

De manière préférée la base (13) du ressort (10) en U est disposée contre le rotor (4), les branches (12) du U s'étendant radialement vers l'extérieur, et ladite base (13) est conformée incurvée de manière à épouser la forme du rotor (4).

Pour le montage des couteaux (5) le ressort (10) en U est inséré dans le logement (23) situé au milieu de l'ensemble formant palier (7) avec les branches du U orientées vers l'extérieur du rotor (4), avant introduction de l'axe cylindrique (8). La forme spécifique de la base (13) du ressort (10) permet son positionnement parfait sur la périphérie incurvée du corps du rotor (4), le maintien en position du ressort (10) ainsi agencé peut être ensuite effectué au moyen d'une goupille (14) qui pénètre dans l'ensemble formant palier (7) par une ouverture (15). La goupille (14) vient se placer au-dessus de la base (13) du ressort (10) de manière à éviter son déplacement. Plusieurs goupilles (14) peuvent être utilisées si cela devait être nécessaire.

Lorsque le ressort (10) est positionné, les oeilletons (22) de la manille (6) sont placés en regard de l'orifice (16), il suffit alors d'écarter les branches (12) du ressort (10) en U pour que l'axe cylindrique (8) puisse traverser complètement ledit orifice (16) pratiqué dans l'ensemble formant palier.

Après positionnement de l'axe cylindrique (8) dans les deux oeilletons (22) de la manille (6), les branches (12) du ressort (10) sont relâchées. A ce moment là, la partie de resserrement (11) des branches (12) du ressort se place dans le relief en creux (9), ce qui a pour effet de verrouiller longitudinalement l'axe (8).

Avantageusement la forme incurvée de la partie de resserrement (11) épouse assez précisément la forme du relief en creux (9) formant une gorge.

De manière à faciliter le montage et le démontage des couteaux (5), c'est-à-dire à faciliter l'écartement des branches (12) du ressort (10), il est envisagé d'employer un outil (17) apte à écarter les branches (12) du U afin de permettre le déplacement longitudinal de l'axe cylindrique (8).

Une opération de démontage des couteaux en relation avec la première variante de l'invention et l'emploi de l'outil (17) est représentée sur les figures 4 à 6.

La figure 4 illustre l'outil (17) comportant des guides (19) et un ergot central (18) qui provoque l'écartement des branches (12) du ressort (10) en U lorsque l'outil (17) est enfoncé dans l'ensemble formant palier (7), tel que cela est représenté sur la figure 5.

Lorsque les branches (12) du ressort (10) sont écartées l'axe cylindrique (8) est libre de se déplacer longitudinalement, ledit axe peut donc être retiré pour libérer la manille (6), tel que cela est illustré sur la figure 6. Lorsque la manille (6) est ainsi libérée les couteaux (5) peuvent être retirés et remplacés.

L'ensemble de l'opération de démontage est extrêmement rapide avec un tel outil, notamment en comparaison du temps nécessaire pour dévisser un écrou dans une fixation traditionnellement utilisée. Par ailleurs, le ressort (10) est parfaitement protégé dans l'ensemble formant palier (7) et ne peut pas être dégagé accidentellement.

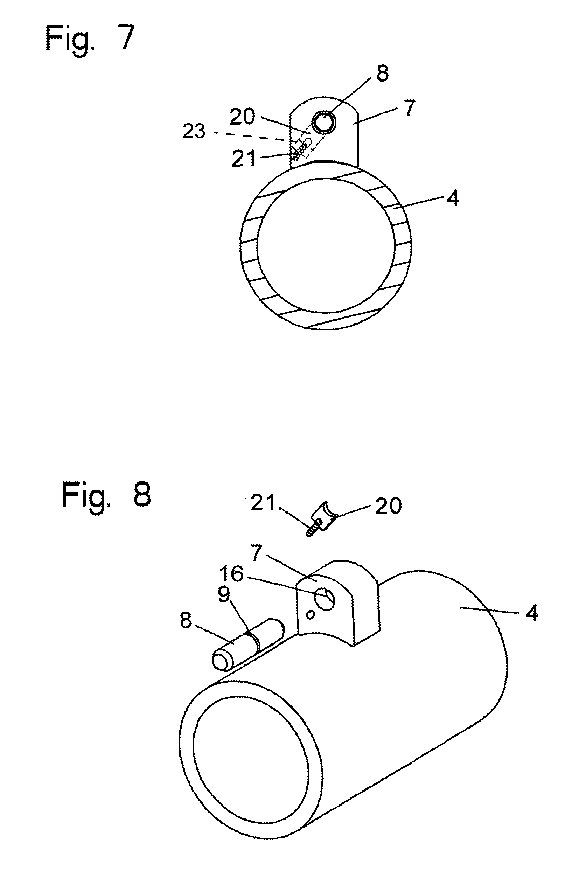

Une deuxième variante de fixation selon l'invention est illustrée sur les figures 7 et 8, la figure 7 étant une vue en coupe du rotor (4) porteur de l'ensemble formant palier (7) fixé à sa périphérie.

Selon cette deuxième variante l'élément élastique (20) est une pièce plate, engagée dans un logement (23) dans le palier (7) et installée au bout d'un ressort (21), lequel ressort (21) est fixé à la base de l'ensemble formant palier (7), à proximité du corps du rotor (4), tel que cela est représenté dans la figure 7.

Avantageusement la partie externe de la pièce plate (20) destinée à bloquer l'axe cylindrique (8) est sensiblement complémentaire de la partie en creux (9) de l'axe cylindrique (8), soit donc une conformation concave lorsque ladite partie en creux (9) est une gorge.

Selon l'une ou l'autre des variantes l'ensemble formant palier (7) peut être configurée de différentes manières, dans la première variante l'ensemble formant palier peut être constitué par deux flasques séparés par une faible épaisseur, ou par une pièce unique comportant une fente. Dans la deuxième variante le logement (23) de la pièce élastique peut être une glissière réalisée en oblique dans l'ensemble formant palier (7).

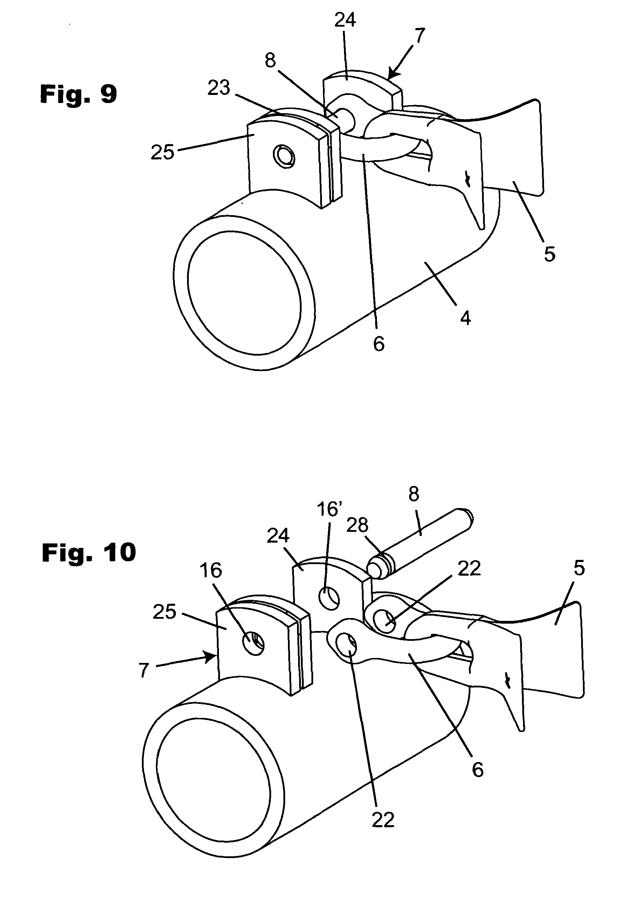

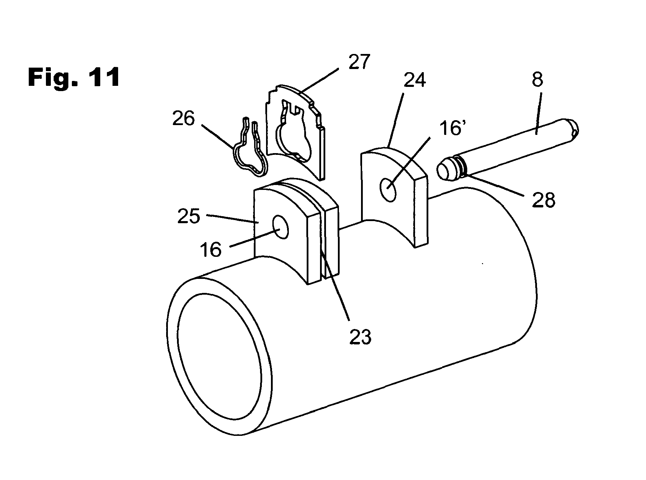

Dans la variante selon les figures 9 à 12 l'ensemble formant palier (7) présente deux pattes (24 et 25) séparées et dont l'une (25) comporte un logement (23) en forme de fente, pour une pièce élastique (26) qui est similaire à la pièce élastique (10) de la première variante de réalisation. Dans ce mode, la pièce (26) est montée dans une fine paroi (27) qui favorise la mise en place et sa fixation dans le logement (23) (voir figure 11). L'axe cylindrique (8) reliant les deux oeilletons (22) des branches de la manille (6) est engagé dans des orifices (16 et 16') dans les pattes (24 et 25).

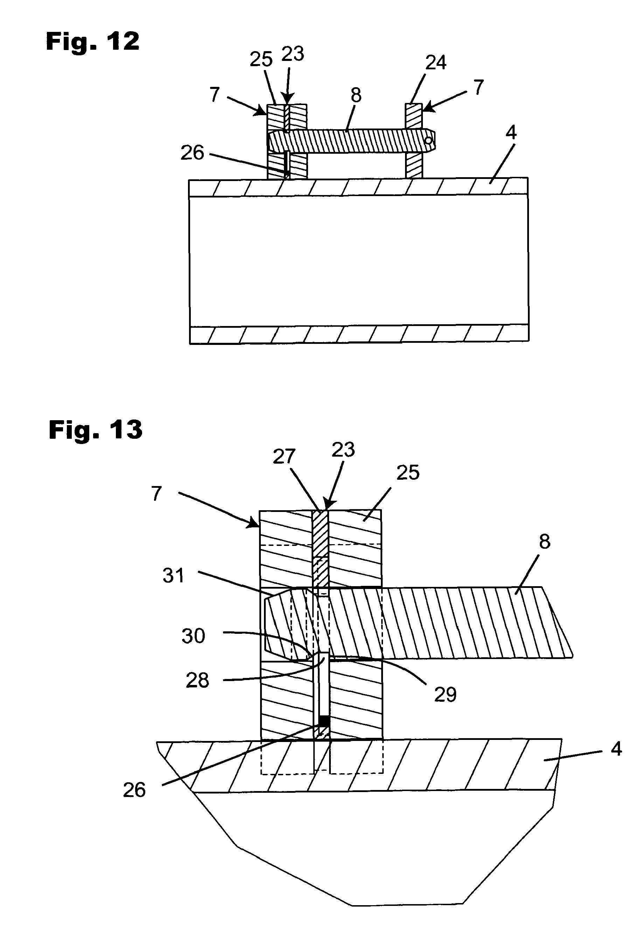

Comme cela ressort notamment des figures 12 et 13 l'axe cylindrique (8) comporte près de son extrémité qui est engagée dans la patte (25) une gorge (28). Celle-ci a le bord (29) qui est orienté vers le milieu de l'axe (8) sensiblement droit et le bord (30) qui est orienté vers son extrémité extérieure inclinée. De plus, ladite extrémité extérieure de l'axe (8) comporte un chanfrein (31).

Pour la fixation d'un couteau (5), l'axe (8) correspondant est engagé dans les orifices (16 et 16') des pattes (24 et 25) après la mise en place de l'élément élastique (26). L'extrémité de l'axe (8) avec le chanfrein (31) est engagée en premier dans lesdits orifices. Dès que cette extrémité rencontre ladite pièce élastique (26), elle écarte automatiquement ses branches (12). Ensuite, lesdites branches (12) s'engagent dans la gorge (28) et immobilisent ledit axe (8) longitudinalement. Dans cette position, la pièce élastique (26) est protégée et ne peut pas être dégagée accidentellement.

Pour le démontage de l'axe cylindrique (8), il est prévu de le pousser dans la direction opposée à celle du montage. Cette opération peut être effectuée au moyen d'une pointe et d'un marteau ou d'un outil similaire. Le bord incliné (30) de la gorge (28) écarte alors les deux branches (12) de la pièce élastique (26) de sorte qu'elles libèrent l'axe (8) et permettent son retrait total de la patte (25).

On constate en sus sur les figures 9, 12 et 13 qu'en position montée, ledit axe (8) ne dépasse pas latéralement de la patte (25) de sorte qu'il ne puisse pas rencontrer d'obstacle pouvant provoquer involontairement son dégagement.

La description qui précède indique trois variantes principales de l'invention, toutefois, sans sortir du cadre de l'invention, il peut être envisagé d'autres moyens élastiques assurant le verrouillage de l'axe cylindrique disposé entre les branches de la manille, il peut aussi être envisagé de placer les pièces élastiques différemment dans l'ensemble formant palier, même si cela est moins fonctionnel.

Les différentes pièces constitutives du dispositif de fixation peuvent être formées dans des matériaux variés, avantageusement choisis pour leurs résistances à l'usure et leurs propriétés spécifiques, et disposer de dimensions plus ou moins importantes, sans sortir du cadre de l'invention.

Un outil spécifique est illustré dans la première variante de l'invention, d'autres outils facilitant le montage et le démontage, peuvent être conçus pour chaque moyen élastique envisageable. Il peut par exemple être prévu, dans la deuxième variante décrite, une ouverture dans l'ensemble palier (7) pour passer une tige apte à repousser la plaque de verrouillage, sans sortir du cadre de l'invention.

L'invention concerne aussi les rotors (4) équipés de dispositifs de fixation de couteaux (5) tels que décrits ainsi que les faucheuses-débroussailleuses munis de rotors (4) équipés de dispositifs de fixation de couteaux (5) tels que décrits.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de fixation de couteaux (5) sur le rotor (4) d'une faucheuse-débroussailleuse comprenant une manille (6) présentant deux branches ayant chacune un oeilleton (22), chaque manille (6) portant un ou plusieurs desdits couteaux (5), ***caractérisé par le fait* qu'**un axe cylindrique (8) reliant les deux oeilletons (22) des branches de la manille (6) est immobilisé longitudinalement dans un ensemble formant palier (7), qu'il traverse, au moyen d'une pièce élastique (10, 20, 26) qui est engagée totalement dans un logement (23) prévu dans l'ensemble formant palier (7).

2. Dispositif de fixation de couteaux (5) selon la revendication 1, ***caractérisé par le fait* que** l'élément élastique (10, 20) est positionné dans la partie centrale de l'ensemble formant palier (7) et les branches de la manille (6) sont disposées à l'extérieur dudit ensemble.

3. Dispositif de fixation de couteaux (5) selon la revendication 2, ***caractérisé par le fait* que** l'axe cylindrique (8) comporte un relief en creux (9) apte à coopérer avec l'élément élastique (10, 20).

4. Dispositif de fixation de couteaux (5) selon la revendication 3, ***caractérisé par le fait* que** le relief en creux (9) est une gorge disposée sur le périmètre de l'axe cylindrique (8) et au milieu de la hauteur du cylindre.

5. Dispositif de fixation de couteaux (5) selon la revendication 4, ***caractérisé par le fait* que** l'élément élastique (10) est un ressort globalement conformé en U avec un resserrement (11) au milieu des branches du U.

6. Dispositif de fixation de couteaux (5) selon la revendication 5, ***caractérisé par le fait* que** la distance dans la partie de resserrement (11) des branches (12) du U du ressort (10), lorsque ce dernier est au repos, est inférieure au diamètre de l'axe cylindrique (8) et sensiblement égale ou légèrement inférieure au diamètre de la partie en creux (9) dudit axe cylindrique (8).

7. Dispositif de fixation de couteaux (5) selon les revendications 5 ou 6, ***caractérisé par le fait* que** la base (13) du ressort (10) en U est disposée contre le corps du rotor (4), les branches (12) du U s'étendant radialement vers l'extérieur, et que ladite base (13) est conformée incurvée de manière à épouser la forme du corps du rotor (4).

8. Dispositif de fixation de couteaux (5) selon l'une quelconque des revendications 5 à 7, ***caractérisé par le fait* que** les branches (12) du ressort (10) en U peuvent être écartées afin de permettre le déplacement longitudinal de l'axe cylindrique (8) lors du montage ou du démontage des couteaux (5).

9. Dispositif de fixation de couteaux (5) selon la revendication 3, ***caractérisé par le fait* que** l'élément élastique (20) est une pièce plate, installée au bout d'un ressort (21), lequel ressort (21) est fixé à la base de l'ensemble formant palier (7), à proximité du rotor (4).

10. Dispositif de fixation de couteaux (5) selon la revendication 9, ***caractérisé par le fait* que** la partie externe de la pièce plate (20) destinée à bloquer l'axe cylindrique (8) est sensiblement complémentaire de la partie en creux (9) de l'axe cylindrique (8).

11. Dispositif de fixation de couteaux (5) selon la revendication 1, ***caractérisé par le fait* que** l'élément élastique (26) est positionné dans un logement (23) présent dans une patte (25) de l'ensemble formant palier (7).

12. Dispositif de fixation de couteaux (5) selon la revendication 11, ***caractérisé par le fait* que** l'élément élastique (26) est monté dans une paroi fine (27) en vue de sa fixation dans le logement (23).

13. Dispositif de fixation de couteaux (5) selon la revendication 11, ***caractérisé par le fait* que** l'axe cylindrique (8) comporte une gorge (28) avec un bord (29) droit et un bord (30) incliné.

14. Dispositif de fixation de couteaux (5) selon la revendication 11, ***caractérisé par le fait* que** l'axe cylindrique (8) comporte une extrémité avec un chanfrein (31).

15. Rotor (4) d'une faucheuse-débroussailleuse équipé de couteaux (5), ***caractérisé par le fait* qu'**il comporte des dispositifs de fixation des couteaux (5) selon l'une quelconque des revendications 1 à 14.

16. Faucheuse-débroussailleuse comportant un rotor (4) équipé de couteaux (5), ***caractérisé par le fait* que** le rotor (4) comporte des dispositifs de fixation des couteaux (5) selon l'une quelconque des revendications 1 à 14.

## Patentansprüche

1. Vorrichtung zur Befestigung von Messern (5) auf dem Rotor (4) eines Böschungsmähers mit einem Gabelkopf (6), der zwei Schenkel mit jeweils einer Öse (22) aufweist, wobei jeder Gabelkopf (6) ein oder mehrere Messer (5) trägt, ***dadurch gekennzeichnet,* dass** eine zylindrische Spindel (8), die die beiden Ösen (22) der Schenkel des Gabelkopfes (6) verbindet, längs in einem ein Lager (7) bildenden Zusammenbau, den sie durchquert, mittels eines elastischen Teils (10, 20, 26), der vollständing in einem Gehäuse (23) eingesetzt ist, das in dem das Lager (7) bildenden Zusammenbau vorgesehen ist, festgestellt ist.

2. Vorrichtung zur Befestigung von Messern (5) nach Anspruch 1, ***dadurch gekennzeichnet,* dass** das elastische Element (10, 20) in dem zentralen Teil des das Lager (7) bildenden Zusammenbaus positioniert ist, und dass die Schenkel des Gabelkopfes (6) außerhalb des Zusammenbaus angeordnet sind.

3. Vorrichtung zur Befestigung von Messern (5) nach Anspruch 2, ***dadurch gekennzeichnet,* dass** die zylindrische Spindel (8) ein Hohlrelief (9) umfasst, das geeignet ist, mit dem elastischen Element (10, 20) zusammenzuwirken.

4. Vorrichtung zur Befestigung von Messern (5) nach Anspruch 3, ***dadurch gekennzeichnet,* dass** das Hohlrelief (9) eine Rille ist, die am Umfang der zylindrischen Spindel (8) und in der Mitte der Höhe des Zylinders angeordnet ist.

5. Vorrichtung zur Befestigung von Messern (5) nach Anspruch 4, ***dadurch gekennzeichnet,* dass** das elastische Element (10) eine global als U ausgebildete Feder mit einer Verengung (11) in der Mitte der Schenkel des U ist.

6. Vorrichtung zur Befestigung von Messern (5) nach Anspruch 5, ***dadurch gekennzeichnet,* dass** der Abstand in dem Verengungsteil (11) der Schenkel (12) des U der Feder (10), wenn diese letztgenannte in Ruhestellung ist, kleiner als der Durchmesser der zylindrischen Spindel (8) und im Wesentlichen gleich oder etwas kleiner als der Durchmesser des Hohlteils (9) der zylindrischen Spindel (8) ist.

7. Vorrichtung zur Befestigung von Messern (5) nach den Ansprüchen 5 oder *6,* ***dadurch gekennzeichnet,* dass** die Basis (13) der U-förmigen Feder (10) am Körper des Rotors (4) angeordnet ist, wobei sich die Schenkel (12) des U radial nach außen erstrecken, und dass die Basis (13) gebogen ausgeführt ist, um sich an die Form des Körpers des Rotors (4) anzuschmiegen.

8. Vorrichtung zur Befestigung von Messern (5) nach irgen einem der Ansprüche 5 bis 7, ***dadurch gekennzeichnet,* dass** die Schenkel (12) der U-förmigen Feder (10) voneinander entfernt werden können, um die Längsverschiebung der zylindrischen Spindel (8) bei der Montage oder Demontage der Messer (5) zu ermöglichen.

9. Vorrichtung zur Befestigung von Messern (5) nach Anspruch 3, ***dadurch gekennzeichnet,* dass** das elastische Element (20) ein flacher Teil ist, der am Ende einer Feder (21) angeordnet ist, wobei die Feder (21) an der Basis des das Lager (7) bildenden Zusammenbaus in der Nähe des Rotors (4) befestigt ist.

10. Vorrichtung zur Befestigung von Messern (5) nach Anspruch 9, ***dadurch gekennzeichnet,* dass** der äußere Teil des flachen Teils (20), der dazu bestimmt ist, die zylindrische Spindel (8) festzustellen, im Wesentlichen zum Hohlteil (9) der zylindrischen Spindel (8) komplementär ist.

11. Vorrichtung zur Befestigung von Messern (5) nach Anspruch 1, ***dadurch gekennzeichnet,* dass** das elastische Element (26) in einem Gehäuse (23) positioniert ist, das in einem Befestigungseisen (25) des das Lager (7) bildenden Zusammenbaus vorhanden ist.

12. Vorrichtung zur Befestigung von Messern (5) nach Anspruch 11, ***dadurch gekennzeichnet,* dass** das elastische Element (26) in einer dünnen Wand (27) im Hinblick auf seine Befestigung in dem Gehäuse (23) montiert ist.

13. Vorrichtung zur Befestigung von Messern (5) nach Anspruch 11, ***dadurch gekennzeichnet,* dass** die zylindrische Spindel (8) eine Rille (28) mit einem geraden Rand (29) und einem geneigten Rand (30) umfasst.

14. Vorrichtung zur Befestigung von Messern (5) nach Anspruch 11, ***dadurch gekennzeichnet,* dass** die zylindrische Spindel (8) ein Ende mit einer Abfasung (31) umfasst.

15. Rotor (4) eines Böschungsmähers, der mit Messern (5) ausgestattet ist, ***dadurch gekennzeichnet,* dass** er Vorrichtungen zur Befestigung von Messern (5) nach irgend einem der Ansprüche 1 bis 14 umfasst.

16. Böschungsmäher mit einem Rotor (4), der mit Messern (5) ausgestattet ist, ***dadurch gekennzeichnet,* dass** der Rotor (4) Vorrichtungen zur Befestigung von Messern (5) nach irgend einem der Ansprüche 1 bis 14 umfasst.

## Claims

1. Device for fastening blades (5) on the rotor (4) of a hedge and grass cutter including a clevis (6) with two branches each having an eyelet (22), each clevis (6) carrying one or more of the said blades (5), ***characterized in* that** a cylindrical shaft (8) connecting the two eyelets (22) of the branches of the clevis (6) is immobilized longitudinally in an assembly forming a bearing (7), which it passes through, by means of an elastic piece (10, 20, 26) which is engaged totally in a housing (23) provided in the assembly forming a bearing (7).

2. Device for fastening blades (5) according to Claim 1, ***characterized in* that** the elastic element (10, 20) is positioned in the central part of the assembly forming a bearing (7), and the branches of the clevis (6) are arranged outside of the said assembly.

3. Device for fastening blades (5) according to Claim 2, ***characterized in* that** the cylindrical shaft (8) comprises a hollow relief (9) able to cooperate with the elastic element (10, 20).

4. Device for fastening blades (5) according to Claim 3, ***characterized in* that** the hollow relief (9) is a groove arranged on the perimeter of the cylindrical shaft (8) and in the middle of the height of the cylinder.

5. Device for fastening blades (5) according to Claim 4, ***characterized in* that** the elastic element (10) is a spring shaped overall in a U-shape with a constriction (11) in the middle of the branches of the U.

6. Device for fastening blades (5) according to Claim 5, ***characterized in* that** the distance in the constriction part (11) of the branches (12) of the U of the spring (10), when the latter is at rest, is less than the diameter of the cylindrical shaft (8) and substantially equal to or slightly less than the diameter of the hollow part (9) of the said cylindrical shaft (8).

7. Device for fastening blades (5) according to Claims 5 or 6, ***characterized in* that** the base (13) of the U-shaped spring (10) is arranged against the body of the rotor (4), the branches (12) of the U extending radially outwards, and that the said base (13) is shaped in an incurved manner so as to conform in shape to the body of the rotor (4).

8. Device for fastening blades (5) according to any one of Claims 5 to 7, ***characterized in* that** the branches (12) of the U-shaped spring (10) can be moved apart so as to allow the longitudinal displacement of the cylindrical shaft (8) during the mounting or dismantling of the blades (5).

9. Device for fastening blades (5) according to Claim 3, ***characterized in* that** the elastic element (20) is a flat piece, arranged at the end of a spring (21), which spring (21) is fastened to the base of the assembly forming a bearing (7), close to the rotor (4).

10. Device for fastening blades (5) according to Claim 9, ***characterized in* that** the outer part of the flat piece (20) intended to block the cylindrical shaft (8) is substantially complementary to the hollow part (9) of the cylindrical shaft (8).

11. Device for fastening blades (5) according to Claim 1, ***characterized in* that** the elastic element (26) is positioned in a housing (23) present in a lug (25) of the assembly forming a bearing (7).

12. Device for fastening blades (5) according to Claim 11, ***characterized in* that** the elastic element (26) is mounted in a thin wall (27) with a view to its fastening in the housing (23).

13. Device for fastening blades (5) according to Claim 11, ***characterized in* that** the cylindrical shaft (8) comprises a groove (28) with a straight edge (29) and an inclined edge (30).

14. Device for fastening blades (5) according to Claim 11, ***characterized in* that** the cylindrical shaft (8) comprises an end with a chamfer (31).

15. Rotor (4) of a hedge and grass cutter equipped with blades (5), ***characterized in* that** it comprises devices for fastening the blades (5) according to any one of Claims 1 to 14.

16. Hedge and grass cutter comprising a rotor (4) equipped with blades (5), ***characterized in* that** the rotor (4) comprises devices for fastening the blades (5) according to any one of Claims 1 to 14.
